# EUROPÄISCHE PATENTSCHRIFT

(11) **EP 2 782 810 B1**
(45) Veröffentlichungstag und Bekanntmachung des Hinweises auf die Patenterteilung: **03.05.2017**
(21) Anmeldenummer: 12794862.8
(22) Anmeldetag: 10.11.2012
(51) Int. Cl.: B62D 15/02, G01D 5/14

(54) **DREHWINKELSENSOR**
ROTATIONAL ANGLE SENSOR
CAPTEUR D'ANGLE DE ROTATION

(30) Priorität: 21.11.2011 DE 102011118928
(43) Veröffentlichungstag der Anmeldung: 01.10.2014
(73) Patentinhaber: Bourns Incorporated, Riverside, CA 92507 (US)
(72) Erfinder: KLIMENKO, Valeri, 81677 München (DE); JAHRSTORFER, Johann, 81369 München (DE)
(74) Vertreter: von Bülow & Tamada
(86) Internationale Anmeldenummer: PCT/EP2012/004685
(87) Internationale Veröffentlichungsnummer: WO 2013/075796

(56) Entgegenhaltungen:
- EP-A1- 1 541 983
- DE-A1- 4 028 246
- DE-A1- 19 900 330

## Beschreibung

Die Erfindung bezieht sich auf einen Drehwinkelsensor gemäß dem Oberbegriff des Patentanspruches 1, der aus der DE 19900330A1 bekannt ist, und insbesondere auf einen Drehwinkelsensor zur Erfassung der Drehstellung einer Lenkwelle eines Kraftfahrzeuges, die mehrere Umdrehungen durchführen kann.

Die DE 19900330 A1 beschreibt einen Drehwinkel- und Drehmomentsensor mit einer Welle, an der zwei magnetisierte Trommeln befestigt sind, denen jeweils ein Magnetsensor zugeordnet ist. Die beiden Trommeln haben einen Abstand zueinander, wobei sich der Abschnitt der Welle zwischen den beiden Trommeln bei Aufbringung eines Drehmomentes verdreht, so dass die beiden Trommeln einen unterschiedlichen Drehwinkel haben und die beiden Sensoren ein unterschiedliches Signal ausgeben, dessen Differenz ein Maß für das aufgebrachte Drehmoment ist. Eine Messung eines Drehwinkels von mehr als 360° ist mit dieser Anordnung nicht möglich.

Die DE 10 2005 007 259 B4 beschreibt eine Positionsmessvorrichtung mit einer drehbaren Welle und einem über mehrere Federn mit der Welle gekoppelten Magnetring sowie einem an dem Außenumfang des Magnetringes angeordneten Magnetjoch. Der Magnetring kann abwechselnd in Umfangsrichtung verteilte Nord- und Südpole haben. Bei Drehung der Welle wird durch die Magnetkräfte der Magnetring zunächst nur nachlaufend zur Welle bewegt, bis die von den Federn ausgeübten Drehkräfte größer sind als die Magnetkräfte, worauf der Magnetring schlagartig bewegt wird und kinetische Energie freisetzt, die über eine am Magnetjoch angeordnete Spule elektrische Impulse erzeugt, die in einer Auswerteeinrichtung gezählt und in einem nicht flüchtigen Speicher gespeichert werden. Die gezählten elektrischen Impulse sind damit ein Maß für den Drehwinkel des Magnetringes. Durch den nicht flüchtigen Speicher kann auch bei Ausfall der Versorgungsspannung der zuletzt gespeicherte Wert abgerufen werden. Sollte sich allerdings während des Ausfalles der Versorgungsspannung der Magnetring gedreht haben, so stimmt der gespeicherte Wert der Drehstellung nicht mehr mit dem tatsächlichen Wert überein und alle nachfolgenden Messergebnisse sind falsch.

Aus der DE 199 62 241 A1 und der DE 195 06 938 A1 sind Drehwinkelsensoren bekannt, bei denen zwei Messzahnräder mit einem Zahnrad der Welle gekoppelt sind, wobei die beiden Messzahnräder unterschiedliche Zähnezahl haben und zwar derart, dass das eine Messzahnrad im vorgegebenen Messbereich eine Anzahl n von vollen Umdrehungen durchführt, während das zweite Messzahnrad eine davon verschiedene Anzahl von n - 1 oder n + 1 vollen Umdrehungen durchläuft. Zwei Sensoren tasten die Drehstellung der beiden Messzahnräder ab und erzeugen entsprechende Ausgangssignale, aus deren Phasendifferenz sich ein absolutes Positionssignal ermitteln lässt.

Bei diesen Drehwinkelsensoren hängt die Messgenauigkeit unter anderem von der Präzision der Verzahnung ab. Zahnräder können durch Herstellungstoleranzen, Montagetoleranzen bezüglich der Achsabstände als auch durch Verschleiß ein Spiel haben, das man im allgemeineren Sinne auch als Schlupf bezeichnen kann und das zu Messfehlern führt. Bei einer Drehrichtungsumkehr äußert sich dieser Fehler als Hysteresefehler. Eine weitere Fehlerquelle bei Zahnrädern und Zahnstangen liegt in dem Mangel an Gleichförmigkeit der Form der Zähne und der Zahnlücken als auch in einer Ungleichförmigkeit der Verteilung der Zähne, was selbst bei spielfreiem Eingriff der Zähne zu Linearitätsfehlern führt. Hierunter fallen auch unrunde Zahnräder, was zur Folge hat, dass bei bestimmten Drehstellungsbereichen ein Spiel vorhanden ist und bei anderen Drehstellungsbereichen nicht. Dabei ist zu berücksichtigen, dass bei den meisten Messanwendungen Kunststoffzahnräder verwendet werden.

Zur Lösung dieses Problems schlägt die DE 199 62 241 A1 vor, die Messzahnräder federelastisch gegen das Zahnrad der Welle zu verspannen.

Die DE 199 37 120 C2 beschreibt eine Lenkwinkelmesseinrichtung mit einer um die Lenksäule eines Fahrzeuges spiralförmig angeordnete Wickelfeder, deren eines Ende an der Lenksäule und deren anderes Ende ortsfest angeordnet ist, wobei an der Wickelfeder ein Messelement zur Messung der Dehnung und/oder Biegung der Wickelfeder angeordnet ist. Aus der gemessenen Dehnung und/oder Biegung der Wickelfeder wird der Lenkwinkel bestimmt.

Die DE 198 356 886 A1 beschreibt einen Lenkwinkelsensor mit einer Wickelfeder, die ebenfalls an der Lenkwelle und am Gehäuse befestigt ist. Ein Sensor erfasst die Änderung der Induktivität der Wickelfeder, die durch eine Änderung der Anzahl der Windungen hervorgerufen wird. Die Wickelfeder ist ein flexibles flaches Band aus federndem Material, das häufig auch als Uhrfeder bezeichnet wird.

Die DE 42 33 393 A1 schlägt vor, eine Federmembran vorzusehen, die an einem Gehäuse und an einer längs der Welle verschieblichen Wandermutter befestigt ist.

Dehnungsmessstreifen erfassen die Verformung der Federmembran.

Die DE 198 95 106 C1 zeigt einen Drehstellungssensor mit einer drehbaren Welle und einem diese umgebenden feststehenden Stator. Im Spalt zwischen der Welle und dem Stator sind zwei hintereinander geschaltete Wickelfedern mit gegenläufigem Wicklungssinn angeordnet, in deren Verbindungsbereich eine Mantelelektrode angeordnet ist, die in Zusammenwirken mit einer feststehenden Elektrode an dem Stator einen Kondensator bildet. Bei Drehung der Welle verändern die beiden Elektroden ihre relative Lage zueinander und führen Kapazitätsänderung des Kondensators herbei, die ein Maß für die Drehung der Welle relativ zum Stator ist.

Modernere Kraftfahrzeugelektroniken benötigen ein hochgenaues Drehwinkelsignal für den Drehwinkel der Lenkwelle. Es wird also gute Linearität, Hysteresefreiheit, hohes Auflösungsvermögen und hohe Messgeschwindigkeit verlangt. Verschleißfreiheit und lange Lebensdauer sind ebenso selbstverständliche Kriterien wie geringe Stückkosten.

Die oben beschriebenen Sensoren mit Messzahnrädern sind zur Erfüllung dieser Kriterien sehr aufwendig und teuer. Die mit Federn arbeitenden, oben beschriebenen Sensoren erbringen nicht die geforderte Messgenauigkeit und insbesondere nicht das geforderte Auflösungsvermögen.

Aufgabe der Erfindung ist es, den Drehwinkelsensor der eingangs genannten Art dahingehend zu verbessern, dass er die oben genannten Kriterien erfüllt und insbesondere ein hochgenaues Ausgangssignal mit gutem Auflösungsvermögen liefert.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Die Grundidee der Erfindung liegt darin, zwei Sensoren zu verwenden, von denen der erste Sensor die Verstellung der Welle direkt misst und der zweite die Verstellung eines Objektes misst, das über zwei Federgruppen mit der Welle und mit einem ortsfesten, unverdrehbaren Körper gekoppelt ist.

Der erste Sensor tastet eine erste Codierscheibe ab, die sich exakt mit der Welle dreht und bei n Umdrehungen ein periodisches Winkelsignal mit der Periode n liefert. Dieses Signal ist sehr genau mit hohem Auflösungsvermögen und kann daher als "Feinsignal" bezeichnet werden. Es lässt aber nicht erkennen, innerhalb welcher der möglichen vollen Umdrehungen sich die Welle befindet.

Der zweite Sensor tastet eine zweite Codierscheibe ab, die über die beiden Federgruppen gelagert ist und den Umdrehungen der Welle nur in vermindertem Umfange folgt. Die zweite Codierscheibe verdreht sich im gesamten Messbereich von n Umdrehungen um einen kleineren Winkelbetrag als die erste Codierscheibe.

Bei einem ersten Ausführungsbeispiel dreht sich die zweite Codierscheibe um einen Winkelbetrag von weniger als 360°, wenn die Welle sich um mehr als 360° und insbesondere um mehrere volle Umdrehungen dreht. Die Winkelverstellung der zweiten Codierscheibe kann dabei auch relativ klein sein und beispielsweise nur wenige Grad oder wenige Millimeter betragen. Damit führt der von dem zugeordneten Sensor abgetastete Bereich der zweiten Codierscheibe praktisch eine (fast) lineare Bewegung durch. Verallgemeinert wird von dem zweiten Sensor die Kraft der beiden Federn oder Federgruppen gemessen, die die Position des mit ihnen gekoppelten Objektes bestimmen. Das Objekt muß somit auch keine ringförmige Codierscheibe sein, sondern kann auch ein sonstiger Körper sein, der mit den beiden Federn bzw. Federgruppen verbunden ist. Als Sensor kann damit auch ein nicht-magnetischer Sensor, wie z.B. ein Dehnungsmesssensor verwendet werden.

Bei einem Ausführungsbeispiel ist die zweite Codierscheibe einerseits über mehrere Federn mit dem ortsfesten Gehäuse und andererseits über mindestens eine spiralförmige aufgewickelte Wickelfeder mit der Welle verbunden. Die Wickelfeder ist so ausgelegt, dass sie die Anzahl n von vollen Umdrehungen der Welle aufnehmen kann. Dabei erzeugt sie in Umfangsrichtung eine Kraft auf die zweite Codierscheibe, die der Kraft der zwischen Codierscheibe und Gehäuse angeordneten Federn entgegengesetzt ist. Der der zweiten Codierscheibe zugeordnete Sensor erzeugt damit ein "Grobsignal" mit schlechterem Auflösungsvermögen, das jedoch ausreichend genau ist, um daraus abzuleiten, innerhalb welcher der möglichen n vollen Umdrehungen sich die Welle befindet. Aus beiden Signalen zusammen, also dem Grobsignal und dem Feinsignal, lässt sich ein hochgenaues Ausgangssignal für die Drehstellung der Welle in vollen Drehbereich ermitteln.

Beim zweiten Ausführungsbeispiel der Erfindung sind die Federgruppen vertauscht. Die zweite Codierscheibe ist somit durch mehrere Federn direkt mit der Welle verbunden und durch mindestens eine Wickelfeder mit dem Gehäuse. Die erst genannten Federn haben eine wesentlich geringere Dehnungs- und Biegefähigkeit als die Wickelfedern. Somit folgt die zweite Codierscheibe im wesentlichen der Drehstellung der Welle, läuft jedoch aufgrund der Wirkung der Wickelfeder hinsichtlich des Drehwinkels der Welle nach, so dass das Ausgangssignal des zweiten Sensors eine andere Periodizität hat als das Ausgangssignal des ersten Sensors. Durch geeignete Auslegung der beiden Federgruppen lässt sich beispielsweise erreichen, dass das Ausgangssignal des zweiten Sensors eine Periodizität von n + 1 hat, während das des ersten Sensors eine Periodizität von n hat. Der Wert n ist > 1 und liegt bei Kraftfahrzeugen üblicherweise zwischen 2 und 4, wobei n nicht ganzzahlig sein muss, beispielsweise auch 2,5 oder 3,5 betragen kann.

Nach einer Weiterbildung der Erfindung sind bei beiden Ausführungsbeispielen jeweils zwei in Axialrichtung der Welle nahe nebeneinander liegende Wickelfedern angeordnet, die gegeneinander um 180° versetzt angeordnet sind. Dadurch werden beim Spannen der Wickelfedern auftretende radiale Kräfte kompensiert, die ansonsten eine radiale Verschiebung der zweiten Codierscheibe gegenüber der Mittelachse der Welle bewirken würden. Selbstverständlich sind beide Wickelfedern hinsichtlich ihrer Federkennlinie gleich ausgelegt.

Vorzugsweise sind beide Codierscheibe magnetisiert und die zugeordneten Sensoren sind Magnetsensoren bekannter Bauart. Selbstverständlich können auch andere Arten von Codierscheiben und Sensoren verwendet werden, wie z.B. optische Codierungen, kapazitive Codierungen oder ohmsche Codierungen mit entsprechenden Sensoren.

Da der Drehwinkelsensor im Kraftfahrzeug Erschütterungen und Schwingungen ausgesetzt ist, sieht eine Weiterbildung der Erfindung vor, dass die zweite Codierscheibe in einem oder mehreren Dämpfungsgliedern gelagert oder geführt ist. In besonders einfacher Weise besteht ein solches Dämpfungsglied aus einer Führung, die mit geringem Spiel die axialen Enden der zweite Codierscheibe umgreifen. Bei axialen oder radialen Schwingungen berührt die Codierscheibe diese Führung, was die Schwingung einerseits begrenzt und durch eine während der Berührung stattfindende Reibung auch dämpft.

Werden als Codierscheibe magnetisierte Scheiben verwendet, so sieht eine Weiterbildung der Erfindung eine Abschirmscheibe bzw. Trennwand vor, die die Magnetfelder der beiden Codierscheiben gegeneinander Abschirmen, so dass das Magnetfeld der einen Codierscheibe den Sensor der anderen Codierscheibe nicht beeinflusst. Vorzugsweise sind die Federn der einen Federgruppe faltenbalgartig geformte Federn aus Federbandmaterial, die somit in Längs- und Biegerichtung federelastisch sind, dagegen in Axialrichtung im wesentlichen steif, um die zweite Codierscheibe in Axialrichtung unverschieblich zu halten. Diese Federn werden auch als Zick-Zack-Federn bezeichnet, da sie einen zick-zack-förmigen Verlauf haben. Vorzugsweise werden mindestens drei oder vier solcher Federn in äquidistanten Abständen zueinander versetzt verwendet.

Nach einer Weiterbildung der Erfindung können zur Verringerung der Baugröße des Drehwinkelsensors beide Federgruppen im Inneren der ringförmigen zweiten Codierscheibe angeordnet sein, wobei die Befestigung der Federgruppen je nach Ausführungsbeispiel so gewählt ist, dass entweder die Wickelfedern oder die anderen Federn, wie z.B. die Zick-Zick-Federn mit der Welle verbunden sind während die anderen Enden beider Federgruppen mit der zweiten Codierscheibe verbunden sind.

Im folgenden wird die Erfindung anhand von Ausführungsbeispielen im Zusammenhang mit der Zeichnung ausführlicher erläutert. Es zeigt:
- Fig. 1: einen schematischen Längsschnitt des Drehwinkelsensors nach einem ersten Ausführungsbeispiel der Erfindung;
- Fig. 2: einen Schnitt längs der Linie A-A der Fig. 1;
- Fig. 3: ein Diagramm der Ausgangssignale der beiden Sensoren des Ausführungsbeispieles der Fig. 1 und 2;
- Fig. 4: einen Längsschnitt eines Drehwinkelsensors nach einem zweiten Ausführungsbeispiel der Erfindung;
- Fig. 5: einen Schnitt längs der Linie B-B der Fig. 4;
- Fig. 6: ein Diagramm der Ausgangssignale der Sensoren des Ausführungsbeispieles der Fig. 4 und 5;
- Fig. 7 a-c: Draufsichten der bei der Erfindung verwendeten Federn einer der Federgruppen;
- Fig. 8: eine Abwandlung des Ausführungsbeispieles der Fig. 1 mit innerhalb der zweiten Codierscheibe liegenden Federgruppen; und
- Fig. 9: ein weiteres Ausführungsbeispiel der Erfindung.

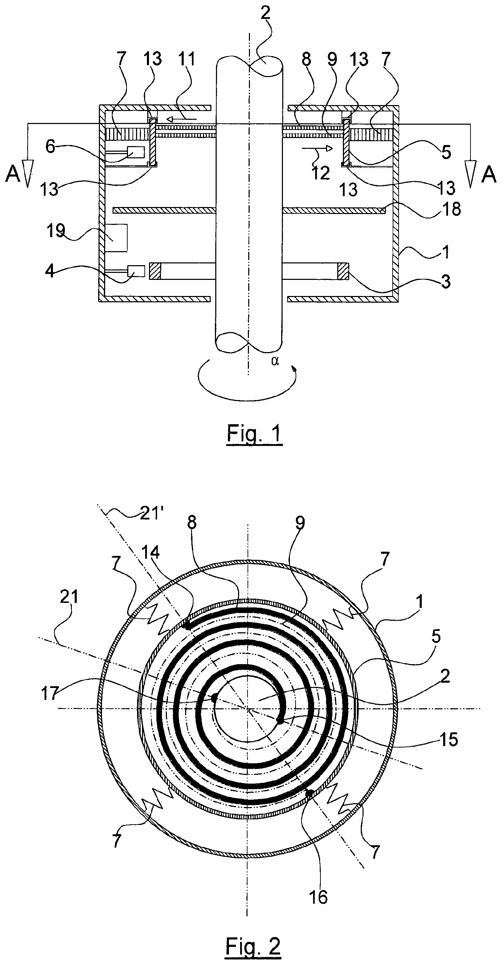

Fig. 1 zeigt einen schematischen Querschnitt des Drehwinkelsensors nach der Erfindung. Der Drehwinkelsensor ist in einem ortsfesten Gehäuse 1 untergebracht, durch das eine Welle 2 hindurch gesteckt ist, deren Drehwinkel α relativ zu dem Gehäuse 1 gemessen werden soll und zwar über einen Winkelbereich von mehr als 360° und insbesondere mehr als zwei volle Umdrehungen. An der Welle 2 ist eine erste Codierscheibe 3 drehfest angebracht. Beispielsweise ist die Codierscheibe 3 eine magnetisierte Scheibe deren Drehstellung von einem ersten Sensor 4 abgetastet wird, wobei in diesem Beispiel der erste Sensor 4 ein Magnetsensor ist, der ein elektrisches Ausgangssignal U1 erzeugt, das dem Drehwinkel α innerhalb einer vollen Umdrehung entspricht. Man erkennt, dass es sich um ein periodisches Signal handelt, das nur innerhalb einer Periode von 360° eine Aussage über den Winkel α treffen lässt jedoch nicht, innerhalb welcher der möglichen Perioden des Messbereiches von n * 360° sich die Welle 2 befindet.

Um festzustellen innerhalb welcher vollen Umdrehung bzw. Periode sich die Welle 2 befindet, ist eine zweite Codierscheibe 5 vorgesehen, die ebenfalls magnetisiert sein kann und als Ring um die Welle 2 angeordnet ist. Ein mit dem Gehäuse 1 verbundener zweiter Sensor 6 tastet die Drehstellung der zweiten Codierscheibe 5 ab und erzeugt ein Ausgangssignal U2.

Die zweite Codierscheibe 5 ist über mehrere Federn 7 mit dem Gehäuse 1 verbunden, so dass die zweite Codierscheibe 5 federnd gegenüber dem Gehäuse 1 gelagert ist. Die Federn 7 sind in äquidistanten Abstanden rings um die zweite Codierscheibe 5 angeordnet, wobei in der Praxis mindestens drei und insbesondere vier solcher Federn 7 vorzusehen sind. Diese Federn 7 sind vorzugsweise faltenbalgartige Federn, die parallel zur Axialrichtung der Welle steif sind und nur in Radialrichtung der Welle sowie in Umfangsrichtung federnd sind. Damit ist die zweite Codierscheibe 5 in Axialrichtung der Welle 2 im Wesentlichen unverschieblich.

Weiter ist die zweite Codierscheibe über zwei Wickelfedern 8 und 9 mit der Welle 2 verbunden. Diese Wickelfedern 8 und 9 sind in einer Ebene spiralförmig gewickelte Federn, die auch als "Uhrenfeder" bezeichnet werden. Diese Federn sind so dimensioniert, dass die Welle 2 sich um den vollen Drehbereich von n * 360° drehen kann, mit n > 1. Je nach Drehstellung der Welle 2 werden diese beiden Federn 8, 9 gespannt oder entspannt und üben damit eine Kraft in Umfangsrichtung bzw. Drehrichtung auf die zweite Codierscheibe 5 aus. Je nach Dimensionierung der Federn 7, 8 und 9 wird die zweite Codierscheibe 5 relativ zum Gehäuse 1 verdreht. Jedoch beim vollen Drehbereich von n * 360° der Welle 2 verdreht sich die zweite Codierscheibe 5 um weniger als 360°. Das Ausgangssignal U2 des zweiten Sensors 6, der die Drehstellung der zweiten Codierscheibe 5 erfasst, entspricht dann der Größe α, wobei α größer 360° sein kann.

Aus dem Signal U2 lässt sich dann ohne weiteres bestimmen, innerhalb welcher vollen Umdrehung sich die Welle 2 befindet. Das Signal U2 kann somit als Grobsignal bezeichnet werden, während das Signal U1 eine wesentlich höhere Auflösung hat und daher als Feinsignal bezeichnet werden kann. Das Grobsignal ist für die üblicherweise geforderte Messgenauigkeit bei Lenkwinkelsensoren von Kraftfahrzeugen nicht ausreichend genau.

Prinzipiell würde auch eine der beiden Wickelfedern 8 und 9 ausreichen, jedoch entsteht das Problem, dass beim Spannen der Wickelfeder auch radiale Kräfte in Richtung der Pfeile 11 und 12 auftreten, durch die die zweite Codierscheibe 5 aus einer zentrierten Lage radial verschoben würde. Aus diesem Grunde sind zwei möglichst nahe nebeneinander liegende Wickelfedern 8 und 9 vorgesehen, die um 180° gegeneinander verdreht an der Welle 2 und der zweiten Codierscheibe 5 befestigt sind. Die beim Spannen der Wickelfeder 8 und der Wickelfeder 9 entstehende radiale Kräfte (Pfeile 11 und 12) sind dann entgegengesetzt gleich groß und kompensieren sich damit. Liegen die beiden Wickelfedern 8 und 9 nahe genug beieinander, so ist ein noch verbleibendes Kippmoment vernachlässigbar in vergleich zu den dagegen wirkenden Kräften der Federn 7.

Durch die federnde Lagerung der zweiten Codierscheibe 5 kann trotz der faltenbalgartigen Federn 7 nicht ausgeschlossen werden, dass bei Erschütterungen oder Vibrationen, wie sie in Kraftfahrzeugen auftreten, die zweite Codierscheibe 5 sich auch in Axial- und Radialrichtung bewegt, was das Messergebnis des zweiten Sensors 6 verfälschen kann. Um dies zu verhindern, ist die zweite Codierscheibe 5 zusätzlich in Dämpfungsgliedern 13 geführt, die ihrerseits am Gehäuse 1 befestigt sind. Diese Dämpfungsglieder 13 umfassen die ringförmige zweite Codierscheibe 5 jeweils an deren axialen Enden mit geringem Spiel. Bei Vibrationen berührt die zweite Codierscheibe 5 dann diese Dämpfungsglieder 13 und wird durch mechanische Reibung an stärkerer Bewegung gehindert. Sobald diese Berührung endet, wird die zweite Codierscheibe 5 durch die Federn 7, 8 und 9 wieder in die richtige Drehlage gebracht.

Es sei darauf hingewiesen, dass die beiden Codierscheiben 3 und 5 auch in anderer Weise als magnetisch codiert sein können. So sind auch insbesondere optische Markierungen möglich, wobei die beiden Sensoren 4 und 6 dann entsprechende optische Sensoren sind. Generell wäre auch möglich, die Codierscheiben an ihrem Außenumfang mit einem ohmschen Widerstand zu beschichten und als Sensoren 4 und 6 Schleiferkontakte zu verwenden.

Fig. 2 zeigt einen Schnitt längs der Linie A-A der Fig. 1, d.h. eine Draufsicht auf die beiden Wickelfedern 8 und 9. Hier ist deutlich zu erkennen, dass die beiden Wickelfedern 8 und 9 um einen Winkel von 180° gegeneinander verdreht sind. Die Projektionen der beiden inneren Enden 15 und 17 der Wickelfedern 8 und 9 liegen auf einer Linie 21, die durch den Mittelpunkt der Welle 2 geht. Weiter liegen die Projektionen der beiden äußeren Enden 14 und 16 der Wickelfedern 8 und 9 auf einer Linie 21', die naturgemäß nur bei einer relativen Drehstellung zwischen Welle 2 und Codierscheibe 5 mit der dargestellten Linie 21 übereinstimmt.

In Fig. 2 sind die jeweiligen Enden 14 und 15 der Winkelfeder 8 einerseits und die Enden 16 und 17 der Winkelfeder andererseits so angeordnet, dass zwischen ihnen die Welle 2 liegt. Es ist selbstverständlich auch möglich, die Enden der beiden Wickelfedern 8 und 9 so zu fixieren, dass sie jeweils auf der gleichen Seite der Welle liegen. In beiden Fällen wird erreicht, dass sich radiale Kräfte entsprechend den Pfeilen 11 und 12 der Fig. 1 kompensieren, wenn die Federn 8 und 9 um 180° gegeneinander verdreht sind.

Bei Verwendung von magnetisierten Codierscheiben 3 und 4 ist zusätzlich eine Trennscheibe 18 zwischen den beiden Codierscheiben 3 und 5 angeordnet, um sicherzustellen, dass sich die Magnetfelder der beiden Codierscheiben 3 und 5 nicht wechselseitig beeinflussen. Diese Trennscheibe 18 aus magnetischem Material ist drehfest mit der Welle 2 verbunden.

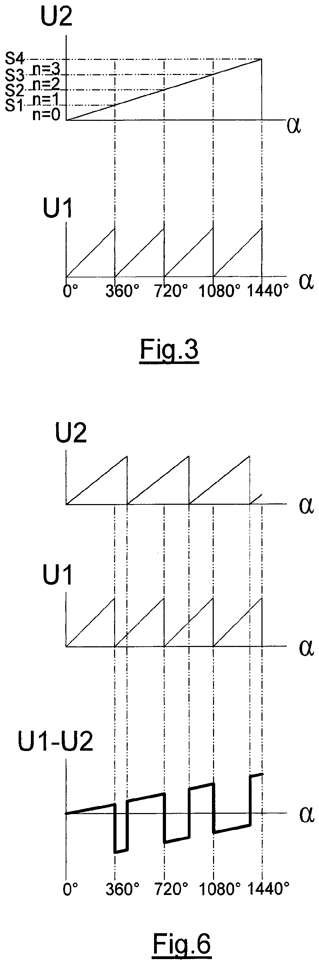

Fig. 3 zeigt die Ausgangssignale U1 und U2 der beiden Sensoren 4 und 6 für einen Messbereich von vier vollen Umdrehungen, d.h. 4 * 360°, d.h. 1440°. Eine innerhalb oder außerhalb des Gehäuses 1 angeordnete Auswerteschaltung 19 empfängt die beiden Ausgangssignale U1 und U2 und ermittelt beispielsweise durch von Komparatoren überwachte Schwellwerte S1 bis S4 einen ganzzahligen Wert von n, wie durch die an dem Diagramm für U2 dargestellten Werte n1, n2, n3 und n4 dargestellt. Der gemessene Winkel entspricht dann dem Wert n * 360° + U1. Man erhält so auf einfache Weise ein hochgenaues Drehstellungssignal für den Winkel α.

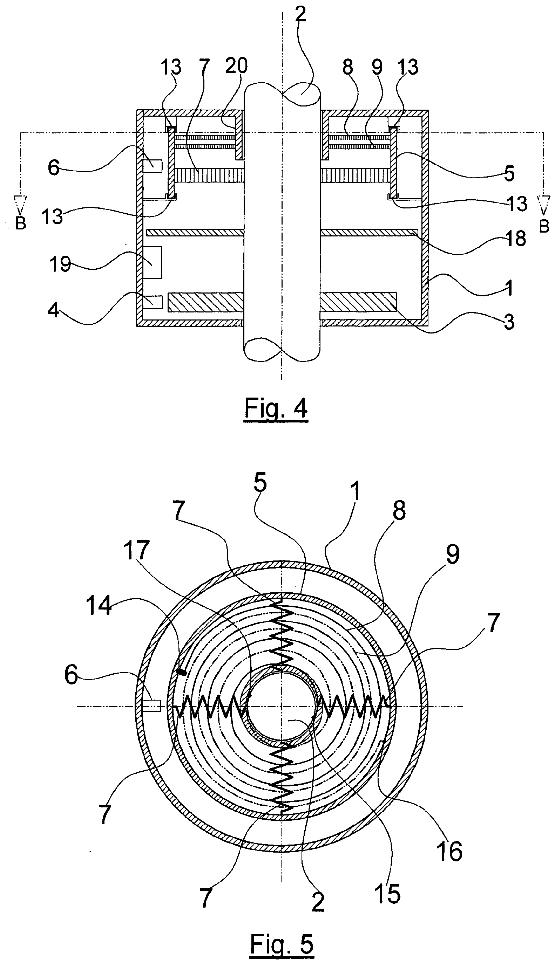

Die Fig. 4 und 5 zeigen ein zweites Ausführungsbeispiel der Erfindung, bei der die Anordnung der Wickelfedern 8 und 9 und der faltenbalgartigen Federn 7 anders ausgestaltet ist. Die faltenbalgartigen Federn 7 sind mit einem Ende drehfest an der Welle 2 und mit ihrem anderen Ende mit der zweiten Codierscheibe 5 verbunden. Die beiden Wickelfedern 8 und 9 sind jeweils mit einem Ende an der zweiten Codierscheibe 5 befestigt und mit ihrem anderen Ende am Gehäuse 1. Im Ausführungsbeispiel der Fig. 4 und 5 hat das Gehäuse 1 einen hülsenartigen Abschnitt 20, der die Welle 2 in geringem Abstand umgibt. Die Wickelfedern 8 und 9 und die Federn 7 liegen also weitestgehend parallel zueinander und liegen somit im Bereich zwischen der Codierscheibe 5 und der Welle 2. Ansonsten sind die Übrigen Elemente, wie erste Codierscheibe 3, erster Sensor 4, Trennscheibe 18 und Dämpfungselemente 13 in gleicher Weise angeordnet, wie im Ausführungsbeispiel der Fig. 1 und 2. Auch sind die beiden Wickelfedern 8 und 9 jeweils um 180° gegeneinander verdreht angeordnet.

Bei dieser Anordnung dreht sich die zweite Codierscheibe 5 weitestgehend mit der Welle 2, da die Federn 7 nur einen vergleichsweisen geringen Dehnungs- bzw. Biegebereich haben. Die zweite Codierscheibe 5 vollführt somit mehrere volle Umdrehungen, wenn auch die Welle 2 mehrere volle Umdrehungen gedreht wird. Allerdings werden beim Drehen der Welle 2 die Wickelfedern 8 und 9 gespannt und erzeugen so eine in Umfangsrichtung wirkende Kraft, die der Mitnahmekraft der Federn 7 entgegenwirkt, so dass die zweite Codierscheibe 5 der Welle 2 bei deren Drehung nachläuft. Der Nachlaufwinkel ist dabei eine Funktion des Drehwinkels α der Welle 2 und bei üblichen Wickelfedern linear von dem Drehwinkel α der Welle abhängig. Je nach Auslegung der Federn 7, 8 und 9 ergibt sich als Ausgangssignal des zweiten Sensors 6 eine in Fig. 6 dargestellte Kurve mit einer anderen Periodizität als die des Ausgangssignales U1 des ersten Sensors 4. Die Ermittlung des Drehwinkels α erfolgt in an sich bekannter Weise, wie beispielsweise in der DE 100 48 911 C1 und DE 198 49 554 C1 beschrieben und zwar durch Differenzbildung der Ausgangssignale U1 und U2. Sofern Sensoren 4 und 6 sinus- und kosinusförmige Ausgangssignale liefern, erfolgt die Berechnung des Winkels α ebenfalls in bekannter Weise wie in der DE 195 39 134 C2 oder DE 197 47 753 C1, DE 199 62 241 A1, DE 195 39 134 A1, DE 198 49 554 C1 beschrieben ist. Auf den Inhalt dieser Schriften wird voll umfänglich Bezug genommen und deren Offenbarungsgehalt in die vorliegende Anmeldung eingeschlossen.

Die Differenz U1 minus U2 ist in Fig. 6 dargestellt. Bei der Differenzbildung entstehende negative Werte werden in bekannter Weise korrigiert, um ein durchgehend lineares Winkelsignal für den Winkel α zu erhalten.

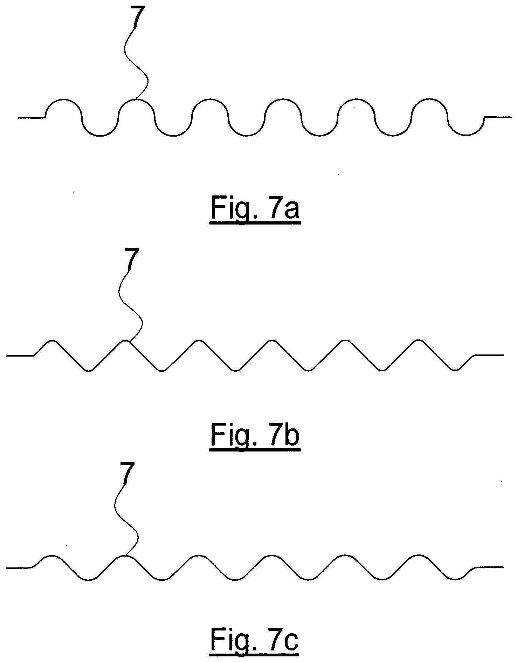

Fig. 7 zeigt in Draufsicht verschiedene Varianten für die Feder 7. Diese Feder wird aus flachem Federbandstahl Zick-Zack-förmig gebogen. In Fig. 7a sind die Biegungen halbkreisförmig, während in den Fig. 7b und 7c nur an den Biegestellen ein Radius vorhanden ist, während dazwischen auch geradlinige Abschnitte liegen. Wichtig ist, dass die Feder 7 sowohl bezogen auf ihre Längsachse gebogen werden kann, als auch in Bezug auf die Längsachse ihre Länge ändern kann. Weiter ist von Vorteil wenn die Feder 7 bezogen auf die Axialrichtung der Welle 2 möglichst steif ist, damit die axiale Lage der zweiten Codierscheibe stabil ist.

Prinzipiell können auch andere Federn verwendet werden, wie z.B. Spiralfedern, Blattfedern, Wickel- bzw. Uhrenfedern, wobei diese Federn steifer sein müssen als die Wickelfedern der anderen Federgruppe, also eine steilere Kennlinie haben. Wenn diese Federn in Axialrichtung der Welle nachgiebig sind, sorgen die Dämpfungselemente 13 für eine Lagerung der zweiten Codierscheibe.

Auch sei darauf hingewiesen, dass das in den Ausführungsbeispielen gezeigte Gehäuse 1 allgemein gesprochen ein ortsfester Körper sein kann, beispielsweise ein Karosserieteil eines Fahrzeuges und nicht notwendigerweise ein Bestandteil des Drehwinkelsensors sein muss. Bevorzugt ist natürlich, dass er eine strukturelle Komponente des Drehwinkelsensors ist, die gegenüber der Welle drehfest ist und damit auch ein Gehäuse des Sensors sein kann.

Um beim Ausführungsbeispiel der Fig. 1 und 2 einen größeren Drehwinkel für die zweite Codierscheibe 5 zu erreichen, kann die Feder 7 auch als eine oder mehrere spiralförmige Wickelfedern ausgebildet sein. Es muss lediglich sichergestellt werden, dass diese Feder/n so ausgelegt ist/sind, dass beim vollen Drehbereich von n * 360° der Welle 2 die zweite Codierscheibe 5 um weniger als 360° gedreht wird. Generell ist diese Variante auch beim Ausführungsbeispiel der Fig. 4 und 5 anwendbar. Wenn diese Wickelfedern auch in Axialrichtung der Welle 2 nachgiebig sind, muss dann für eine axiale Lagerung der zweiten Codierscheibe 5 gesorgt werden.

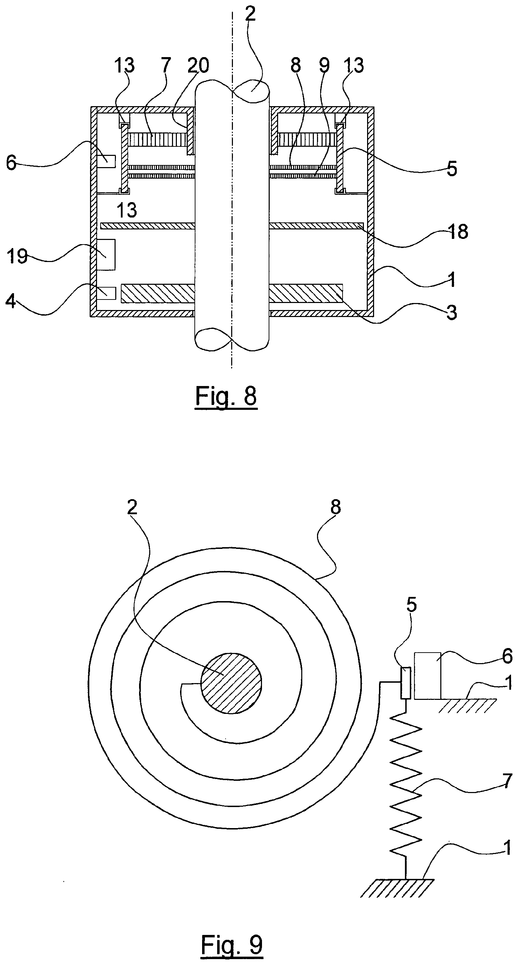

Das Ausführungsbeispiel der Fig. 8 unterscheidet sich von dem der Fig. 4 dadurch, dass die beiden Federgruppen mit den Federn 7 einerseits und den Federn 8, 9 andererseits vertauscht sind, womit die Funktion des Ausführungsbeispieles der Fig. 1 erreicht wird, d.h. die zweite Codierscheibe 5 ist über die Federn 7 mit dem Gehäuse verbunden und zwar mit dem hülsenartigen Abschnitt 20 des Gehäuses, der die Welle 2 dicht umgibt. Damit kann die zweite Codierscheibe 5 nur eine sehr begrenzte Drehbewegung durchführen wie im Ausführungsbeispiel 1.

Gegenüber dem Ausführungsbeispiel der Fig. 1 unterscheidet sich das der Fig. 8 im Ergebnis dadurch, dass die Federn 7 im Inneren der zweiten Codierscheibe 5 liegen und dass der hülsenartige Abschnitt 20 des Gehäuses 1 vorhanden ist.

Auch sei darauf hingewiesen, dass es theoretisch möglich ist, beim Ausführungsbeispiel der Fig. 4 die Wickelfedern 8 und 9 an die Aussenseite der zweiten Codierscheibe 5 zu legen und ihr anderes Ende am Gehäuse 1 zu befestigen.

Fig. 9 zeigt eine schematische Draufsicht eines weiteren Ausführungsbeispieles der Erfindung, bei dem anstelle der zweiten Codierscheibe 5 der vorhergehenden Ausführungsbeispiele nur ein Objekt 5 vorhanden ist, das zwischen einer Wickelfeder 8 und einer weiteren Feder 7 gehalten ist. Ein Ende der Wickelfeder 8 ist mit der Welle 2 verbunden. Ein Ende der Feder 7 ist mit einem ortsfesten Gegenstand 1 verbunden, der relativ zur Welle 2 unverschieblich ist und allgemein nicht Bestandteil des Drehwinkelsensors sein muss, sondern beispielsweise auch ein Karrosserieteil eines Fahrzeuges. Selbstverständlich kann es sich auch um ein Gehäuse des Drehwinkelsensors handeln. Das Objekt 5 kann ein kurzer Magnet sein, dem der zweite Sensor 6 zugeordnet ist, der seinerseits wiederum ortsfest gehalten ist. Der Sensor 6 erfasst somit die relative Position des Objektes 5, das sich je nach Konfiguration und Auslegung der Federn 7 und 8 nicht auf einer Kreisbahn um die Welle 2 bewegen muss, wie es bei den vorhergehend beschriebenen Ausführungsbeispielen der Fall ist. Die räumliche Position des Objektes 5 ist jedoch gleichwohl von der wechselseitigen Verspannung der Federn 7 und 8 abhängig und damit auch vom Drehwinkel der Welle 2, auch wenn sich das Objekt 5 selbst nicht auf einer Kreisbahn bewegt. Trotzdem lässt sich aus der räumlichen Position des Objektes 5 bestimmen, innerhalb welcher der möglichen n Umdrehungen sich die Welle befindet.

Die übrigen notwendigen Komponenten des Drehstellungssensors, nämlich die erste Codierscheibe 3 und der zugeordnete erste Sensor 4 sind in der Darstellung der Fig. 9 nicht abgebildet und entsprechend den Abbildungen der Fig. 1 bis 8 vorzusehen. Aus Fig. 9 wird aber besonders deutlich, dass der zweite Sensor 6 eine Position des Objektes 5 und nicht notwendigerweise eine Drehwinkelstellung erfasst.

## Patentansprüche

1. Drehwinkelsensor zur Messung der Drehposition einer Welle (2), mit zwei Sensoren (4, 6),
von denen der erste Sensor (4) die Drehposition der Welle (2) misst und
der zweite Sensor (6) die Position eines Objektes (5) misst, **dadurch gekennzeichnet, dass**
das Objekt (5) über mindestens eine erste Feder (7) mit der Welle (2) und über mindestens eine zweite Feder (8,9) mit einem gegenüber der Welle (2) ortsfesten Körper (1) gekoppelt ist.

2. Drehwinkelsensor nach Anspruch 1, **dadurch gekennzeichnet, dass** eine erste Federgruppe mehrere der ersten Federn (8,9) und eine zweite Federgruppe mehrere der zweiten Federn (7) aufweist.

3. Drehwinkelsensor nach Anspruch 1 oder 2, **dadurch gekennzeichnet, dass** der erste Sensor eine drehfest mit der Welle (2) verbundene erste Codierscheibe (3) abtastet und ein Ausgangssignal (U1) erzeugt, das direkt dem Drehwinkel (α) der Welle entspricht.

4. Drehwinkelsensor nach einem der Ansprüche 1 bis 3, **dadurch gekennzeichnet, dass** das Objekt (5) eine zweite Codierscheibe ist und der zweite Sensor (6) ein zweites Ausgangssignal (U2) erzeugt, das der Drehposition des Objektes (5) entspricht.

5. Drehwinkelsensor nach einem der Ansprüche 2 bis 4, **dadurch gekennzeichnet, dass** mindestens eine Federgruppen eine spiralförmige Wickelfeder (8, 9) aufweist, die so dimensioniert und ausgelegt ist, dass sie den vollen Drehbereich der Welle (2) abdeckt.

6. Drehwinkelsensor nach Anspruch 5, **dadurch gekennzeichnet, dass** das Objekt (5) durch zwei gleiche, parallel und nah zueinander angeordnete Wickelfedern (8, 9), die um 180° zueinander verdreht angeordnet sind, mit der Welle (2) oder dem Körper (1) verbunden ist.

7. Drehwinkelsensor nach einem der Ansprüche 2 bis 5, **dadurch gekennzeichnet, dass** eine der Federgruppen mehrere Zick-Zack-förmig gebogene Federbandfedern aufweist und dass mindestens drei solcher Federn (7) in äquidistanten Abständen zueinander rings um die Welle (2) verteilt angeordnet sind.

8. Drehwinkelsensor nach einem der Ansprüche 5 bis 7, **dadurch gekennzeichnet, dass** die Wickelfeder/n (8, 9) an der Welle (2) und an der zweiten Codierscheibe (5) befestigt ist/sind und dass die Federn (7) der anderen Federgruppe an der zweiten Codierscheibe (5) und dem Gehäuse (1) befestigt sind.

9. Drehwinkelsensor nach einem der Ansprüche 5 bis 7, **dadurch gekennzeichnet, dass** die Wickelfeder/n(8, 9) am Gehäuse (1) und an der zweiten Codierscheibe (5) befestigt ist/sind und dass die Federn (7) der anderen Federgruppe an der Welle (2) und an der zweiten Codierscheibe (5) befestigt sind.

10. Drehwinkelsensor nach einem der Ansprüche 2 bis 9, **dadurch gekennzeichnet, dass** die Federn (7; 8, 9) beider Federgruppen innerhalb der zweiten Codierscheibe (5) angeordnet sind.

11. Drehwinkelsensor nach einem der Ansprüche 4 bis 10, **dadurch gekennzeichnet, dass** die zweite Codierscheibe (5) in Dämpfungsgliedern (13) in Axialrichtung und Radialrichtung der Welle geführt sind.

12. Drehwinkelsensor nach einem der Ansprüche 4 bis 11, **dadurch gekennzeichnet, dass** beide Codierscheiben (3, 5) magnetisiert sind und die zugeordneten Sensoren (4, 6) Magnetsensoren sind.

13. Drehwinkelsensor nach Anspruch 12, **dadurch gekennzeichnet, dass** zwischen den beiden in Axialrichtung gegeneinander versetzt angeordneten Codierscheiben (3, 5) eine Trennscheibe (18) angeordnet ist, die die Magnetfelder der beiden Codierscheiben (3, 5) gegeneinander abschirmt.

14. Drehwinkelsensor nach einem der Ansprüche 1 bis 13, **dadurch gekennzeichnet, dass** der Körper (1) eine strukturelle Komponente des Drehwinkelsensors ist.

15. Drehwinkelsensor nach einem der Ansprüche 1 bis 13, **dadurch gekennzeichnet, dass** der Körper (1) Teil einer Komponente ist, die benachbart zum Drehwinkelsensor angeordnet ist.

16. Drehwinkelsensor nach einem der Ansprüche 1 bis 13, **dadurch gekennzeichnet, dass** der Körper (1) irgendein Teil des Drehwinkelsensors ist, das unverdrehbar ist.

17. Drehwinkelsensor nach Anspruch 16, **dadurch gekennzeichnet, dass** der Körper (1) ein Gehäuse des Drehwinkelsensors ist.

## Claims

1. Rotation angle sensor for measuring the rotational position of a shaft (2) with two sensors (4, 6) of which the first sensor (4) measures the rotational position of the shaft (2) and the second sensor (6) measures the position of an object (5), **characterized in that** the object (5) is coupled via at least one first spring (7) with the shaft (2) and via at least one second spring (8, 9) with a body (1) fixed relative to the shaft (2).

2. Rotation angle sensor according to claim 1, **characterized in that** a first group of springs comprises several of the first springs (8, 9) and a second group of springs comprises several of the second springs (7).

3. Rotation angle sensor according to claim 1 or 2, **characterized in that** the first sensor samples a coding disk (3) that is rotation-fixedly connected with the shaft (2) and generates an output signal (U1) that directly corresponds to the rotation angle (α) of the shaft.

4. Rotation angle sensor according to one of the claims 1 to 3, **characterized in that** the object (5) is a second code disc and the second sensor (6) generates a second output signal (U2) that corresponds to the rotational position of the object (5).

5. Rotation angle sensor according to one of the claims 2 to 4, **characterized in that** at least one spring group comprises a coil shaped buffer spring (8, 9) that is dimensioned and provided **in that** it covers the complete rotation area of the shaft (2).

6. Rotation angle sensor according to claim 5, **characterized in that** the object (5) is connected with the shaft (2) or the body (1) by two equal buffer springs (8, 9) arranged in parallel and close to each other that are arranged 180° shifted to each other.

7. Rotation angle sensor according to one of the claims 2 to 5, **characterized in that** one of the spring groups comprises several spring band springs bend in a zigzag shape and **in that** at least three of these springs (7) are arranged distributed in equidistant distances to each other around the shaft (2).

8. Rotation angle sensor according to one of the claims 5 to 7, **characterized in that** the buffer spring/s (8, 9) is/are fixed at the shaft (2) and at the second coding disc (5) and that the springs (7) of the other spring groups are fixed at the second coding disc (5) and the housing (1).

9. Rotation angle sensor according to one of the claims 5 to 7, **characterized in that** the buffer spring/s (8, 9) is/are fixed at the housing (1) and at the second coding disc (5) and that the springs (7) of the other spring group are fixed at the shaft (2) and at the second coding disc (5).

10. Rotation angle sensor according to one of the claims 2 to 9, **characterized in that** the springs (7; 8, 9) of both spring groups are arranged within the second coding disc (5).

11. Rotation angle sensor according to one of the claims 4 to 10, **characterized in that** the second coding disc (5) is guided in damping elements (13) in axial direction and in radial direction of the shaft.

12. Rotation angle sensor according to one of the claims 4 to 11, **characterized in that** both coding discs (3, 5) are magnetized and the corresponding sensors (4, 6) are magnet sensors.

13. Rotation angle sensor according to claim 12, **characterized in that** between the both coding discs that are arranged axially displaced to each other, a separation disc is arranged that shields the magnetic fields of both coding discs (3, 5) against each other.

14. Rotation angle sensor according to one of the claims 1 to 13, **characterized in that** the body (1) is a structural component of the rotation angle sensor.

15. Rotation angle sensor according to one of the claims 1 to 13, **characterized in that** the body (1) is part of a component that is arranged adjacent to the rotation angle sensor.

16. Rotation angle sensor according to one of the claims 1 to 13, **characterized in that** the body (1) is any part of the rotation angle sensor, that is undistortable.

17. Rotation angle sensor according to claim 16, **characterized in that** the body (1) is a housing of the rotation angle sensor.

## Revendications

1. Capteur d'angle de rotation pour mesurer la position angulaire d'un arbre (2), avec deux capteurs (4, 6),
parmi lesquels le premier capteur (4) mesure la position angulaire de l'arbre (2) et
le second capteur (6) mesure la position d'un objet (5), **caractérisé en ce que**
l'objet (5) est couplé à l'arbre (2) au moyen d'au moins un premier ressort (7) et est couplé au moyen d'au moins un second ressort (8, 9) à un corps (1) fixe en rotation par rapport à l'arbre (2).

2. Capteur d'angle de rotation selon la revendication 1, **caractérisé en ce qu'**un premier groupe de ressorts comprend plusieurs des premiers ressorts (8, 9) et **en ce qu'**un second groupe de ressorts comprend plusieurs des seconds ressorts (7).

3. Capteur d'angle de rotation selon la revendication 1 ou 2, **caractérisé en ce que** le premier capteur scrute un premier disque de codage (3) fixe en rotation sur l'arbre (2) et fournit un signal de sortie (U1) qui correspond directement à l'angle de rotation (α) de l'arbre.

4. Capteur d'angle de rotation selon l'une des revendications 1 à 3, **caractérisé en ce que** l'objet (5) est un second disque de codage, et le second capteur (6) fournit un second signal de sortie (U2) qui correspond à la position angulaire de l'objet (5).

5. Capteur d'angle rotatif selon l'une des revendications 2 à 4, **caractérisé en ce qu'**au moins un groupe de ressorts comprend un ressort d'enroulement (8, 9) en forme de spirale, qui est dimensionné et configuré de façon à couvrir toute la plage de rotation de l'arbre (2).

6. Capteur d'angle rotatif selon la revendication 5, **caractérisé en ce que** l'objet (5) est connecté à l'arbre (2) ou au corps (1) au moyen de deux ressorts d'enroulement (8, 9) identiques, parallèles et disposés proches l'un de l'autre, lesquels sont décalés de 180° l'un par rapport à l'autre.

7. Capteur d'angle rotatif selon l'une des revendications 2 à 5, **caractérisé en ce que** l'un des groupes de ressorts comprend plusieurs ressorts à bande formée en zigzag, et **en ce qu'**au moins trois de ces ressorts (7) sont disposés autour de l'arbre (2) en des positions équidistantes l'une de l'autre.

8. Capteur d'angle rotatif selon l'une des revendications 5 à 7, **caractérisé en ce que** le ou les ressorts d'enroulement (8, 9) est ou sont fixés à l'arbre (2) et à un second disque de codage (5), et **en ce que** les ressorts (7) de l'autre groupe de ressorts sont fixés au second disque de codage (5) et au boîtier (1).

9. Capteur d'angle de rotation selon l'une des revendications 5 à 7, **caractérisé en ce que** le ou les ressorts d'enroulement (8, 9) est ou sont fixés au boîtier (1) et à un second disque de codage (5), et **en ce que** les ressorts (7) de l'autre groupe de ressorts sont fixés à l'arbre (2) et au second disque de codage (5).

10. Capteur d'angle de rotation selon l'une des revendications 2 à 9, **caractérisé en ce que** les ressorts (7 ; 8, 9) de l'un et l'autre des groupes de ressorts sont disposés à l'intérieur du second disque de codage (5).

11. Capteur d'angle de rotation selon l'une des revendications 4 à 10, **caractérisé en ce que** le second disque de codage (5) est guidé dans des éléments amortisseurs (13) dans la direction axiale et dans la direction radiale de l'arbre.

12. Capteur d'angle de rotation selon l'une des revendications 4 à 11, **caractérisé en ce que** l'un et l'autre des disques de codage (3, 5) sont magnétisés, et **en ce que** les capteurs associés (4, 6) sont des capteurs magnétiques.

13. Capteur d'angle de rotation selon la revendication 12, **caractérisé en ce qu'**un disque de séparation (18) est agencé entre les deux disques de codage (3, 5) disposés à l'écart l'un de l'autre selon la direction axiale, lequel disque de séparation sépare les champs magnétiques des deux disques de codage (3, 5) l'un par rapport à l'autre.

14. Capteur d'angle de rotation selon l'une des revendications 1 à 13, **caractérisé en ce que** le corps (1) est un composant structurel du capteur d'angle de rotation.

15. Capteur d'angle de rotation selon l'une des revendications 1 à 13, **caractérisé en ce que** le corps (1) est une partie d'un composant disposé adjacent au capteur d'angle de rotation.

16. Capteur d'angle de rotation selon l'une des revendications 1 à 13, **caractérisé en ce que** le corps (1) est n'importe quelle partie fixe en rotation du capteur d'angle de rotation.

17. Capteur d'angle de rotation selon la revendication 16, **caractérisé en ce que** le corps (1) est un boîtier du capteur d'angle de rotation.
